# EUROPÄISCHE PATENTANMELDUNG

(11) **EP 4 325 046 A1**
(43) Veröffentlichungstag der Anmeldung: **21.02.2024**
(21) Anmeldenummer: 23191904.4
(22) Anmeldetag: 17.08.2023
(51) Int. Cl.: F03D 7/02, F03D 7/04, F03D 13/30

(54) **VERFAHREN ZUM EINSTELLEN EINER WINDENERGIEANLAGE**

(30) Priorität: 18.08.2022 DE 102022120945
(71) Anmelder: Wobben Properties GmbH, 26607 Aurich (DE)
(72) Erfinder: Giesler, Matthias, 26603 Aurich (DE); Strauch, Philip, 26603 Aurich (DE); Zimmermann, Frank, 26723 Emden (DE); Nitsche, Maik, 26419 Schortens (DE); Harms, Harro, 26639 Wiesmoor (DE)
(74) Vertreter: Eisenführ Speiser

(57) **Zusammenfassung**

Verfahren zum Einstellen einer einen Rotor mit mehreren in ihrem Blattwinkel verstellbaren Rotorblättern aufweisenden ganz oder teilweise errichteten Windenergieanlage, wobei die Windenergieanlage veränderliche Betriebssituationen einnehmen kann, und jede Betriebssituation durch eine Kombination aus einstellbaren Anlageneinstellungen der Windenergieanlage und erfassbaren Umweltbedingungen gekennzeichnet ist, sodass zu gegebenen Umweltbedingungen eine Betriebssituation durch Einstellen der Anlageneinstellungen einstellbar ist, und zu vermeidende und/oder geeignete Betriebssituationen in einem Speicher abgespeichert sind, indem jeweils zu einer zu vermeidenden Betriebssituation eine Kombination aus Umweltbedingungen und Anlageneinstellungen als zu vermeidende Kombination abgespeichert ist, und/oder jeweils zu einer geeigneten Betriebssituation eine Kombination aus Umweltbedingungen und Anlageneinstellungen als geeignete Kombination abgespeichert ist, und zum Vermeiden von zu vermeidenden Betriebssituationen Umweltbedingungen erfasst werden und in Abhängigkeit von den erfassten Umweltbedingungen und den abgespeicherten zu vermeidenden und/oder geeigneten Kombinationen Anlageneinstellungen der Windenergieanlage so ausgewählt und eingestellt werden, dass Anlageneinstellungen abgespeicherter zu vermeidender Kombinationen vermieden werden, und/oder Anlageneinstellungen aus abgespeicherten geeigneten Kombinationen ausgewählt werden.

## Beschreibung

Die vorliegende Erfindung betrifft ein Verfahren zum Einstellen einer Windenergieanlage, um zu vermeidende Betriebssituationen zu vermeiden. Ebenfalls betrifft die vorliegende Erfindung eine entsprechende Windenergieanlage.

Windenergieanlagen werden im laufenden Betrieb so eingestellt, dass sie möglichst viel Leistung in das elektrische Versorgungsnetz einspeisen können. Es ist aber auch darauf zu achten, dass Betriebssituationen vermieden werden, bei denen die Windenergieanlage beschädigt werden kann. Im laufenden Betrieb werden insbesondere bei hohen Windgeschwindigkeiten die Windenergieanlagen so abgeregelt, dass sie dadurch nicht beschädigt werden können.

Es kommen aber auch Situationen in Betracht, bei denen nicht alleine eine hohe Windgeschwindigkeit oder ein belastender Betrieb zu solchen belastungsgefährdenden Situationen führt. Besonders außerhalb des laufenden Betriebs, selbst bevor die Windenergieanlage an ein elektrisches Versorgungsnetz angeschlossen ist, können die Windenergieanlage gefährdende Situationen auftreten.

Besonders können Situationen auftreten, bei denen die Rotorblätter oder andere Elemente der Windenergieanlage in Schwingungen geraten.

Solche Schwingungen können zwar besonders auch durch hohe Windgeschwindigkeiten angeregt werden, oftmals kommt es aber auch auf weitere Kriterien an. Jedenfalls führt eine gewisse Windgeschwindigkeit nicht in jedem Fall zu Schwingungen.

Vielmehr treten solche Schwingungen oftmals erst bei bestimmten Stellungen des Rotors, Blattwinkeln der Rotorblätter und anderen Kriterien auf. Auch ist der Wind nicht ausschließlich durch seine Windgeschwindigkeit gekennzeichnet, sondern es kann auch seine Böigkeit, Windrichtung und/oder Scherung, um nur einige Beispiele zu nennen, Einfluss auf solche Schwingungen haben. Von all diesen Kriterien kann abhängen, ob überhaupt Schwingungen auftreten. Es kann aber auch eine Amplitude der Schwingungen von den Kriterien abhängen, insbesondere, ob diese zulässig oder unzulässig hoch wird.

Um eine Beschädigung der Windenergieanlage zu vermeiden, kann somit vorgesehen sein, die Windenergieanlage ständig auf Betriebssituationen hin zu überwachen, die die Windenergieanlage schädigen könnten. Insbesondere kann ständig überwacht werden, ob Schwingungen mit einer gefährdenden Amplitude auftreten. Werden solche Schwingungen erfasst, kann eine Einstellung der Windenergieanlage verändert werden, bis die Situation sich verbessert hat, insbesondere bis erfasste Schwingungen zurückgegangen oder gänzlich verschwunden sind.

Ein solches Vorgehen ist aber aufwendig und setzt eine ständige Überwachung voraus und es muss festgelegt werden, welche konkreten Betriebseinstellungen bei welchen erfassten Betriebssituationen in welcher Art und Weise zu verändern sind, um richtig auf erkannte Probleme zu reagieren.

Der vorliegenden Erfindung liegt somit die Aufgabe zugrunde, zumindest eines der oben genannten Probleme zu adressieren. Insbesondere soll eine Lösung geschaffen werden, die Windenergieanlage gefährdende Betriebssituationen auf möglichst einfache Art und Weise und/oder möglichst zuverlässig zu vermeiden. Zumindest soll zu bisher bekannten Lösungen eine Alternative vorgeschlagen werden.

Erfindungsgemäß wird ein Verfahren nach Anspruch 1 vorgeschlagen. Demnach wird ein Verfahren zum Einstellen einer ganz oder teilweise errichteten Windenergieanlage vorgeschlagen. Die zugrundeliegende Windenergieanlage hat einen Rotor mit mehreren in ihrem Blattwinkel verstellbaren Rotorblättern. Die Windenergieanlage kann veränderliche Betriebssituationen einnehmen, wobei jede Betriebssituation durch eine Kombination aus einstellbaren Anlageneinstellungen der Windenergieanlage und erfassbaren Umweltbedingungen gekennzeichnet ist. Zu gegebenen Umweltbedingungen kann somit eine Betriebssituation durch Einstellen der Anlageneinstellungen eingestellt werden. Es kommt auch in Betracht, dass die Windenergieanlage noch nicht vollständig erreichtet ist und/oder noch nicht an ein elektrisches Versorgungsnetz angeschlossen ist. Insbesondere wird vorgeschlagen, dass die Windenergieanlage wenigstens soweit erreichtet ist, dass wenigstens eines der mehreren Rotorblätter montiert ist.

Als Umweltbedingungen wird insbesondere von Windgeschwindigkeit und Windrichtung ausgegangen, wobei weitere Eigenschaften wie Turbulenzen hinzu kommen können. Es wird davon ausgegangen, dass auf diese Umweltbedingungen kein Einfluss genommen werden kann.

Es kann aber Einfluss auf die Anlageneinstellungen genommen werden. Solche Anlageneinstellungen können insbesondere ein kollektiver Blattwinkel, individuelle Blattwinkel, eine Azimutausrichtung der Windenergieanlage, eine Rotorstellung des Rotors und eine Drehzahl des Rotors sein. Es wurde erkannt, dass erst eine Kombination der gegebenen Umweltbedingungen mit den konkreten Anlageneinstellungen zu Problemen führen kann bzw. umgekehrt bei bestimmten Kombinationen keine Probleme auftreten. Jede Betriebssituation, die durch die Umweltbedingungen und Anlageneinstellungen gekennzeichnet ist, kann somit durch die Wahl der Anlageneinstellungen beeinflusst werden.

Es wird nun weiter vorgeschlagen, zu vermeidende und/odergeeignete Betriebssituationen in einem Speicher abzuspeichern. Zum Ausführen des Verfahrens sind somit zu vermeidende und/oder geeignete Betriebssituationen in einem Speicher abgespeichert. Es können später weitere Betriebssituationen hinzukommen, um den Datenbestand zu erhöhen.

Eine zu vermeidende Betriebssituation ist somit eine solche, bei der die Windenergieanlage gefährdet werden kann. Eine geeignete Betriebssituation ist eine, bei der eine Gefährdung der Windenergieanlage nicht zu erwarten ist. Eine geeignete Betriebssituation ist insoweit eine gewünschte oder bevorzugte Betriebssituation.

Eine Betriebssituation ist dadurch abgespeichert, dass eine Kombination aus Umweltbedingungen und Anlageneinstellungen, die nämlich zu der jeweiligen Betriebssituation gehören, abgespeichert ist. Die Umweltbedingungen einer Betriebssituation und damit einer Kombination können als Umweltbedingungssatz bezeichnet werden, also z.B. ein Satz bestehend aus Windgeschwindigkeit und einer Windrichtung. Die Windrichtung kann als absolute oder relative Windrichtung betrachtet werden. Eine relative Windrichtung bezeichnet die Windrichtung in Bezug auf eine Azimutausrichtung, die auch als Gondelausrichtung oder Ausrichtung der Gondel bezeichnet werden kann. Die relative Windrichtung kann daher synonym auch als Azimutfehlwinkel bezeichnet werden, und weitere Umweltbedingungen können berücksichtigt werden. Die Anlageneinstellungen einer Betriebssituation und damit einer Kombination können als Anlageneinstellungssatz bezeichnet werden, also z.B. ein Satz bestehend aus Azimutausrichtung, Rotorposition und Blattwinkel, ggf. weiteren Anlageneinstellungen. Als oder anstatt der Azimutausrichtung kann auch ein Azimutfehlwinkel berücksichtigt werden. Zu einer zu vermeidenden Betriebssituation ist somit eine Kombination aus Umweltbedingungen und Anlageneinstellungen als zu vermeidende Kombination abgespeichert und zu einer geeigneten Betriebssituation ist eine Kombination aus Umweltbedingungen und Anlageneinstellungen als geeignete Kombination abgespeichert. Es ist also jeweils eine Kombination aus Umweltbedingungssatz und Anlageneinstellungssatz abgespeichert.

Es können somit diverse zu vermeidende Kombinationen und diverse geeignete Kombinationen abgespeichert werden. Vorteilhaft ist, wenn sowohl zu vermeidende als auch geeignete Kombinationen abgespeichert sind. Es kommt aber auch in Betracht, dass jeweils nur eine dieser beiden Kategorien verwendet wird und abgespeichert ist.

Zum Vermeiden von zu vermeidenden Betriebssituationen werden zunächst Umweltbedingungen erfasst. Mit anderen Worten wird insbesondere eine Windgeschwindigkeit und eine Windrichtung erfasst. Das kann bedeuten, dass aktuelle Umweltbedingungen erfasst, insbesondere gemessen werden. Es kommt aber auch in Betracht, dass Umweltbedingungen, oder ein Teil davon, durch einen Beobachter geschätzt werden oder anderweitig bekannt sind, beispielsweise aus Wettervorhersagen.

Es kommt auch in Betracht, dass Umweltbedingungen prognostiziert werden, um Einstellungen vorzunehmen, die nicht nur für den Moment, sondern auch für zu erwartende Betriebssituationen sinnvoll sind bzw., um für einen längeren Zeitraum zu vermeidende Betriebssituationen zu vermeiden.

In Abhängigkeit von den erfassten Umweltbedingungen und den abgespeicherten zu vermeidenden und/oder geeigneten Kombinationen werden dann Anlageneinstellungen der Windenergieanlage ausgewählt, also ein Anlageneinstellungssatz, und eingestellt. Dies erfolgt so, dass jeweils ein Anlageneinstellungssatz abgespeicherter zu vermeidender Kombinationen vermieden wird und/oder ein Anlageneinstellungssatz aus abgespeicherten geeigneten Kombinationen ausgewählt wird.

Basierend auf den erfassten Umweltbedingungen ist somit aus dem Speicher ablesbar, welche Kombinationen zu vermeiden sind. Liegt also, um ein einfaches Beispiel zu geben, eine bestimmte Windrichtung und Windgeschwindigkeit vor, kann aus den abgespeicherten Daten erkannt werden, welche Azimutausrichtung, welcher Blattwinkel und welche Rotorstellung, falls der Rotor arretiert ist, zu vermeiden sind, um zu vermeidende Betriebssituationen zu vermeiden. Es ist der konkrete Anlageneinstellungssatz zu vermeiden. Einzelne Werte können daraus verwendet werden, aber nicht der gesamte Satz. Es werden dann also Anlageneinstellungen ausgewählt, nämlich entsprechend eines konkreten Anlageneinstellungssatzes, die nicht einer zu diesen Umweltbedingungen abgespeicherten zu vermeidenden Kombination entspricht. Dadurch kann die zu vermeidende Betriebssituation vermieden werden.

Außerdem oder alternativ kommt aber auch in Betracht, dass eine ausdrücklich als geeignet abgespeicherte Kombination ausgewählt wird, denn diese führt damit auch dazu, dass keine zu vermeidende Betriebssituation eingestellt wird.

Besonders bevorzugt ist es, das Vermeiden zu vermeidender Kombinationen und das gezielte Auswählen einer geeigneten Kombination zusammen anzuwenden. Beispielsweise kann so vorgegangen werden, dass zunächst zu erfassten Umweltbedingungen geprüft wird, ob eine geeignete Kombination abgespeichert ist. Die kann dann ausgewählt werden. Ist zu erfassten Umweltbedingungen keine geeignete Kombination abgespeichert, kann eine beliebige ausgewählt werden, solange sie aber keine zu vermeidende Kombination ist. Gegebenenfalls sind dabei weitere Einschränkungen zu berücksichtigen, wie zum Beispiel notwendige Rotorpositionen bei Aufbau oder Montage oder zu vermeidende Azimutausrichtungen aufgrund der Positionierung eines Krans.

Es kann auch so vorgegangen werden, dass ausgehend von den aktuellen Anlageneinstellungen und basierend auf den erfassten Umweltbedingungen die zu den aktuellen Anlageneinstellungen ähnlichste abgespeicherte geeignete Kombination gewählt wird, wobei ggf. überprüft wird, ob solche Kombinationen auch umsetzbar sind. Besonders beim Errichten der Windenergieanlage kann es vorkommen, dass nicht alle Einstellungen umsetzbar sind, weil z.B. ein für den Aufbau eingesetzter Kran nicht alle Gondelstellungen und/oder Rotorpositionen zulässt, um nur ein Beispiel zu nennen.

Außerdem oder alternativ können Anlageneinstellungen so ausgewählt werden, dass sie einen möglichst großen Unterschied zu einer abgespeicherten zu vermeidenden Kombination haben.

Gemäß einem Aspekt wird vorgeschlagen, dass als Umweltbedingungen Windgeschwindigkeit und Windrichtung, absolut oder relativ, betrachtet werden. Besonders die Windgeschwindigkeit und die Windrichtung wurden als besonders relevante Umweltbedingungen zu vermeidender Betriebssituationen als auch geeigneter Betriebssituationen erkannt. Besonders relevant kann dabei sein, mit welcher Richtung der Wind an der Gondel der Windenergieanlage angreift, bezogen auf die Ausrichtung der Gondel, also mit welchem Winkel in Bezug auf eine Gondellängsachse.

Optional wird vorgeschlagen, als eine Umweltbedingung eine Turbulenzintensität zu berücksichtigen, da diese besonders Auswirkungen auf Schwingungen haben kann.

Als weitere optionale Umweltbedingung wird vorgeschlagen, eine Umgebungstemperatur der Windenergieanlage zu betrachten. Es wurde erkannt, dass die Umgebungstemperatur eine Eigenschaft der Luft ist und damit die Wirkung des Windes auf die Windenergieanlage beeinflusst.

Als weitere mögliche optionale Umweltbedingung wird vorgeschlagen, eine vertikale Windscherung zu betrachten. Eine vertikale Windscherung bezeichnet eine Veränderung der Windgeschwindigkeit mit der Höhe. Es wurde erkannt, dass eine solche Windscherung Einfluss auf Schwingungen haben kann, da sie dazu führt, dass der Wind in einem niedrigeren Bereich des Rotors der Windenergieanlage mit einer anderen Windgeschwindigkeit angreift als in einem höheren Bereich des Rotors der Windenergieanlage.

Als weitere mögliche optionale Umweltbedingung wird vorgeschlagen, eine vertikale Windrichtungsscherung zu betrachten. Eine vertikale Windrichtungsscherung bezeichnet eine Veränderung der Windrichtung mit der Höhe. Es wurde besonders erkannt, dass eine solche vertikale Windrichtungsscherung Einfluss auf Schwingungen haben kann, da sie dazu führt, dass der Wind in einem niedrigeren Bereich des Rotors der Windenergieanlage mit einem anderen Winkel angreift als in einem höheren Bereich des Rotors der Windenergieanlage.

Außerdem wird als optionale Umweltbedingung vorgeschlagen, einen vertikalen Neigungswinkel des Windes zu betrachten. Ein vertikaler Neigungswinkel ist ein Winkel, mit dem der Wind relativ zu einer horizontalen Ebene strömt, also ein Winkel, mit dem der Wind aufwärts oder abwärts strömt. Er kann auch als "flow inclination" bezeichnet werden. Es wurde erkannt, dass ein solcher vertikaler Neigungswinkel besonders Einfluss auf Schwingungsanregungen an Rotorblättern haben kann.

Als weitere optionale Umweltbedingung wird vorgeschlagen, eine Luftdichte zu berücksichtigen. Die Luftdichte hat Einfluss auf die Wirkung des Windes auf die Windenergieanlage und damit auf Belastungen, einschließlich Schwingungen, die ausgelöst werden können.

Gemäß einem Aspekt wird vorgeschlagen, dass als Anlageneinstellungen ein kollektiver Blattwinkel, individuelle Blattwinkel, eine Azimutausrichtung der Windenergieanlage und/oder eine Rotorstellung des Rotors betrachtet werden. Es wurde besonders erkannt, dass Blattwinkel, Azimutausrichtung, die relativ zur Windrichtung oder absolut verwendet werden kann, eine Rotordrehzahl und eine Rotorstellung des Rotors besonders Einfluss auf Schwingungen haben können. Besonders besteht ein Zusammenhang zwischen Azimutausrichtung und Windrichtung, sodass es vorteilhaft ist, die Azimutausrichtung als Anlageneinstellung zu betrachten, insbesondere im Zusammenhang mit der Windrichtung als berücksichtigte Umweltbedingung.

Die Rotorstellung beeinflusst ebenfalls das konkrete Anströmen des Windes auf die Rotorblätter. Über die Rotorstellung kann festgelegt oder abgeleitet werden, ob ein Rotorblatt senkrecht nach oben in einer 12-Uhr-Stellung steht oder nicht. Die Rotorstellung des Rotors wirkt sich auch besonders durch die relative Stellung der Rotorblätter zum Turm der Windenergieanlage aus. Es wurde erkannt, dass es großen Einfluss auf Strömungssituationen haben kann, ob ein Rotorblatt unmittelbar vor dem Turm ist, also in einer sogenannten 6-Uhr-Stellung, ob es etwas weiter als der Turm gedreht ist, oder ob sich gar kein Rotorblatt in Turmnähe befindet.

Die Blattwinkel haben ebenfalls Einfluss auf die Anströmwinkel des Windes auf jedes Rotorblatt. Hier kann unter Anströmwinkel ein Winkel zwischen scheinbarer Windrichtung und einer Sehne des Rotorblatts verstanden werden. Durch den jeweiligen Blattwinkel kann in großem Maße die Anströmrichtung, also der Anströmwinkel, und damit der Einfluss des Windes auf das Rotorblatt verändert werden. Diese Anströmrichtung bzw. der Anströmwinkel können großen Einfluss auf auftretende Schwingungen haben.

Ein solcher Blattwinkel kann über einen kollektiven Blattwinkel vorgegeben werden, also einen Blattwinkel, der für alle Rotorblätter gleich eingestellt ist. Besonders bei einer Azimutausrichtung der Windenergieanlage in den Wind, also wie bei einem normalen Betrieb der Windenergieanlage, ergeben sich für die Angriffswinkel des Windes auf die Rotorblätter etwa gleiche Voraussetzungen, sodass auch gleiche oder ähnliche Winkel zu gleichen oder ähnlichen Effekten an den Rotorblättern führen können. Das kann über den kollektiven Blattwinkel berücksichtigt werden.

Besonders dann, wenn aber die Windenergieanlage nicht zum Wind ausgerichtet ist, sondern beispielsweise quer dazu steht, und dann nicht betrieben wird, hängt die Anströmrichtung auf die Rotorblätter auch ganz erheblich davon ab, in welcher Rotorposition sie sich befinden. Hier kann es nun sinnvoll sein, die Blattwinkel individuell einzustellen, um jeweils möglichst wenig Angriffsfläche für den die Windenergieanlage seitlich anströmenden Wind zu geben. Dies ist aber nur ein Beispiel und es ist nicht unbedingt ausschließlich relevant, wie groß eine Angriffsfläche ist, die ein Rotorblatt dem Wind bietet, da das Rotorblatt ein aerodynamisches Profil aufweist.

Ein kollektiver Blattwinkel und individuelle Blattwinkel können zusammen vorgegeben werden, indem der kollektive Blattwinkel einen Grundwinkel vorgibt und die individuellen Blattwinkel davon ausgehend vorgegeben und eingestellt werden können.

Eine Rotorstellung kann betrachtet werden, wenn der Rotor arretiert ist. Ist er nicht arretiert, wird vorgeschlagen, die Rotordrehzahl zu betrachten. Sie kann dann eine ähnliche Relevanz für zu vermeidende oder geeignete Kombinationen haben, wie im arretierten Fall die Rotorstellung.

Optional ist vorgesehen, als Anlageneinstellung zu berücksichtigen, ob der Rotor arretiert ist. Besonders im Fall, wenn die Windenergieanlage insoweit nicht in Betrieb ist, als sie keine elektrische Leistung erzeugt und in das elektrische Versorgungsnetz einspeist, kann der Rotor in einer vorbestimmten Rotorstellung arretiert sein, oder es wird zugelassen, dass er sich frei dreht.

Es wurde erkannt, dass durch das Arretieren des Rotors eine vorteilhafte Rotorstellung eingestellt werden kann. Ungünstige und zu vermeidende Rotorstellungen können dadurch vermieden werden.

Andererseits wurde auch erkannt, dass ein nicht arretierter Rotor den Vorteil hat, dass Rotorblätter Kräften durch den Wind nachgeben können. Ob der Rotor arretiert ist, kann somit eine wichtige Anlageneinstellung darstellen und daher wird vorgeschlagen, das zu berücksichtigen. Besonders kann eine Arretierung für Wartung und Montagearbeiten vorgenommen werden, wohingegen ein freier, d.h. nicht arretierter, Rotor ohne Drehmoment in anderen Situationen verwendet werden kann.

Gemäß einem Aspekt wird vorgeschlagen, dass die Rotorblätter der Windenergieanlage nach Errichtung der Windenergieanlage, aber vor Anschluss der Windenergieanlage an ein elektrisches Versorgungsnetz, mittels einer individuellen Blattverstellung verstellt werden, bei der die Rotorblätter in ihrem Blattwinkel individuell und voneinander unabhängig verstellt werden, wobei die Rotorblätter in einem einspeisenden Betrieb, nachdem die Windenergieanlage an das elektrische Versorgungsnetz angeschlossen ist, über Vorgabe eines kollektiven Blattwinkels eingestellt werden, sodass alle Rotorblätter zueinander synchron und mit gleichen Blattwinkeln eingestellt werden. Die Energie zum Verstellen der Rotorblätter und ggf. anderer Elemente kann von einer Batterie, einer externen Stromversorgung, z.B. einem Dieselgenerator, oder aus eigener Leistungserzeugung der Windenergieanlage bezogen werden.

Hier wurde besonders erkannt, dass zu vermeidende Betriebssituationen besonders für Windenergieanlagen auftreten können, die zwar bereits vollständig errichtet sind, aber noch nicht an das elektrische Versorgungsnetz angeschlossen sind und damit auch noch nicht vollständig betrieben werden können. Die Windenergieanlagen können dann in einem im Grunde passiven Zustand den Windbedingungen ausgesetzt sein. Dabei kommt auch in Betracht, dass sie seitlich angeströmt werden. Dazu wurde erkannt, dass es vorteilhaft sein kann, besonders bei einer solchen seitlichen Anströmung die Rotorblätter individuell voneinander zu verstellen und damit auch individuelle Blattwinkel einzustellen.

Gleichzeitig wurde erkannt, dass es sinnvoll sein kann, diese individuelle Blattverstellung im Betrieb der Windenergieanlage, wenn diese an das elektrische Versorgungsnetz angeschlossen ist und ganz normal elektrische Leistung aus Wind erzeugt, nicht zu verwenden. Stattdessen kann es besser sein, die Windenergieanlage im laufenden, einspeisenden Betrieb, mit einheitlichen Blattwinkeln zu betreiben. Im laufenden Betrieb keine individuelle Blattverstellung vorzunehmen, kann aerodynamisch sinnvoll sein und/oder, um einen Verschleiß von Blattverstelleinrichtungen gering zu halten.

Daher wird diese Kombination vorgeschlagen, bei der eine individuelle Blattverstellung nur vorgenommen wird, bevor die Windenergieanlage an das elektrische Versorgungsnetz angeschlossen ist. Gleichzeitig wird vorgeschlagen, eine kollektive Blattverstellung, also ohne individuelle Verstellung der Rotorblätter nur für den Betrieb vorzusehen, nachdem die Windenergieanlage an das elektrische Versorgungsnetz angeschlossen ist und in dieses einspeist.

Gemäß einem Aspekt wird vorgeschlagen, für die zu vermeidenden Kombinationen und/oder geeigneten Kombinationen die Anlageneinstellungen und Umweltbedingungen jeweils als zu vermeidendes bzw. geeignetes Intervall abzuspeichern und/oder zu berücksichtigen. Hierdurch kann die Größe eines notwendigen Datensatzes erheblich reduziert werden bzw. klein gehalten werden, da unterschiedliche Werte eines Intervalls zusammengefasst werden können. Insbesondere kommt in Betracht, für Windgeschwindigkeiten Intervalle mit einer Breite von wenigstens 0,1 m/s insbesondere wenigstens oder genau 2 m/s vorzusehen. Für die Windrichtung wird vorgeschlagen, Intervalle mit einer Breite von wenigstens 1 ° vorzusehen, insbesondere wenigstens 5°. Für die Rotorposition kann eine Intervallbreite im Bereich von 1° bis 50° vorgesehen sein, insbesondere im Bereich von 5° bis 30°. Für die Blattwinkel kann eine Intervallbreite von 0,1° bis 15°, insbesondere im Bereich von1° bis 5° vorgesehen sein.

Gemäß einem Aspekt wird vorgeschlagen, dass die zu vermeidenden Betriebssituationen solche sind, bei denen eine Oszillation wenigstens einer Komponente der Windenergieanlage, insbesondere wenigstens eines der Rotorblätter , mit einer gefährdenden Amplitude zu erwarten ist, insbesondere mit einer Amplitude, die eine vorgebbare Amplitudengrenze erreicht oder übersteigt. Es kommt auch in Betracht, dass die Amplitude einer Schwingung des Turmes der Windenergieanlage als zu vermeidende Betriebssituation berücksichtigt wird. Besonders solche Betriebssituationen wurden als kritisch erkannt und es wird vorgeschlagen, diese besonders zu berücksichtigen. Hier wurde auch erkannt, dass Oszillationen auftreten können und nicht unbedingt zu vermeiden sind, wenn ihre Amplitude nur ausreichend gering ist. Bei einer hohen Amplitude, also einer gefährdenden Amplitude, sind sie aber zu berücksichtigen. Zur Berücksichtigung kann eine vorbestimmte Amplitudengrenze vorgegeben werden. Eine solche kann in Simulationen bestimmt werden.

Besonders wird vorgeschlagen, Oszillationen von Rotorblättern bzw. zumindest eines Rotorblatts, zu berücksichtigen. Hier wurde besonders erkannt, dass die Rotorblätter besonders anfällig für Schwingungen sind, da sie entsprechend groß und dem Wind ausgesetzt sind. Es kommt aber auch in Betracht, dass Oszillationen des Turms der Windenergieanlage auftreten und eine gefährdende Amplitude erreichen können.

Eine gefährdende Amplitude ist eine solche, die die Windenergieanlage potentiell schädigen kann. Eine Oszillation mit zu hoher Amplitude muss nicht unbedingt sofort zu einer Schädigung wie dem Bruch eines Rotorblatts führen, sie kann aber zu einer so hohen Belastung führen, dass in Kürze mit einer Schädigung zu rechnen ist.

Außerdem oder alternativ wird vorgeschlagen, dass dann, wenn eine Oszillation der Komponente, also insbesondere wenigstens eines der Rotorblätter, zu einer aktuellen Betriebssituation erfasst wird, insbesondere mit einer Amplitude erfasst wird, die die vorgebbare Amplitudengrenze erreicht oder übersteigt, die aktuelle Betriebssituation als zu vermeidende Betriebssituation abgespeichert wird. Dazu wird die Kombination aus Anlageneinstellungen und Umweltbedingungen, also die Kombination aus dem Anlageneinstellungssatz und Umweltbedingungssatz der aktuellen Betriebssituation als zu vermeidende Kombination abgespeichert.

Auf diese Art und Weise kann besonders eine entsprechende Datenbank nach und nach aufgebaut werden. Es ist zu beachten, dass es zum Erfassen einer solchen Betriebssituation mit auftretender hoher, nämlich potentiell gefährdender Amplitude nicht erforderlich ist, dass die Windenergieanlage in einer solchen Betriebssituation dauerhaft betrieben wird. Vielmehr können Oszillationen bereits beim Durchsteuern einer Betriebssituation auftreten. Die Windenergieanlage durchfährt also eine solche Betriebssituation, während die Oszillationen kurz auftreten, aber gleich wieder verschwinden, da die Betriebssituation nicht beibehalten wird. Durch dieses kurze Auftreten können die Oszillationen erfasst und abgespeichert werden, ohne dass die Windenergieanlage tatsächlich gefährdet wird.

Beispielsweise kann, um es anschaulich an einem einfachen Beispiel zu erklären, eine Windenergieanlage in ihrer Azimutposition kontinuierlich verstellt werden und dabei einen Bereich durchfahren, bei dem Oszillationen mit einer hohen Amplitude auftreten. Während die Windenergieanlage wie geplant die Azimutposition weiter verstellt, kann die zwischenzeitlich erreichte Betriebssituation aber als zu vermeidende Betriebssituation abgespeichert werden.

Vorzugsweise erfolgt ein solches Erkennen als zu vermeidende Betriebssituation einschließlich nachgelagertem Abspeichern als zu vermeidende Betriebssituation durch eine Prozesssteuereinheit eigenständig, also vollautomatisch. Es kommt aber auch in Betracht, dass z.B. ein Serviceteam Beobachtungen einer Betriebssituation macht oder ein Messteam gezielt Messungen hierfür durchführt., die als zu vermeidende Betriebssituation einzustufen ist und daraufhin die beobachtete, in dem Moment nämlich aktuelle, Betriebssituation als zu vermeidende Betriebssituation abspeichert.

Gemäß einem Aspekt wird vorgeschlagen, dass dann, wenn zu einer aktuellen Betriebssituation keine Oszillation der Komponente der Windenergieanlage, insbesondere wenigstens eines der Rotorblätter, erfasst wird, zumindest nur mit einer Amplitude, die unter einer vorgebbaren Amplitudenschwelle liegt, die aktuelle Betriebssituation als geeignete Betriebssituation abgespeichert wird. Das kann erfolgen, indem eine Kombination aus Anlageneinstellungen und Umweltbedingungen der aktuellen Betriebssituation als geeignete Kombination abgespeichert wird. Es wird also die Kombination aus dem Anlageneinstellungssatz und Umweltbedingungssatz der aktuellen Betriebssituation als geeignete Kombination abgespeichert.

Die Amplitudenschwelle wird besonders mit einem vergleichsweise geringen Wert vorgegeben, der unter der vorgebbaren Amplitudengrenze liegt, ab der von einer gefährdenden Amplitude ausgegangen wird.

Es kommt auch in Betracht, alternativ oder zusätzlich zur Überprüfung auf eine Schwingung bzw. Oszillation auf eine absolute Belastung, insbesondere auf eine absolute Biegung oder Deformation zu prüfen. In jedem Fall, also sowohl bei Oszillationen als auch bei absoluten Belastungen, kann eine Erfassung über eine Beschleunigung erfolgen, und/oder mittels Dehnungssensoren wie Dehnungsmessstreifen. Die Beschleunigung kann ggf. in eine Oszillation umgerechnet werden und/oder es kann ein auf die Beschleunigung umgerechneter Grenzwert verwendet werden.

Es wird also vorgeschlagen zu überwachen, ob eine aktuelle Betriebssituation potentiell schädigend ist bzw. potentiell gefährdend ist oder nicht. Hierbei wird auf Oszillationen geprüft. Treten solche bei einer aktuellen Betriebssituation nicht auf, wird diese als geeignete Betriebssituation abgespeichert. Das Gleiche gilt, wenn nur geringe Oszillationen auftreten, die als harmlos einzustufen sind.

Das Abspeichern erfolgt dadurch, dass eine Kombination aus Anlageneinstellungen und Umweltbedingungen der aktuellen Betriebssituation als geeignete Kombination abgespeichert wird. Auf diese Art und Weise kann ein Datensatz auch im laufenden Betrieb erweitert werden, einschließlich auch in einer Situation, bei der die Windenergieanlage noch nicht an das elektrische Versorgungsnetz angeschlossen ist.

Optional wird vorgeschlagen, dass eine abgespeicherte geeignete Betriebssituation weiter überprüft wird und als bestätigte geeignete Betriebssituation abgespeichert wird, wenn wiederholt diese abgespeicherte geeignete Betriebssituation aufgetreten ist und dabei keine Oszillationen der Komponenten bzw. Rotorblätter aufgetreten sind, zumindest nur mit einer Amplitude, die unter der vorgebbaren Amplitudenschwelle liegt. Es wird also vorgeschlagen, für geeignete Betriebssituationen eine Verifikation durchzuführen. Ist eine Betriebssituation einmal aufgetreten und wurde als geeignete Betriebssituation erkannt, kann sie bereits als geeignete Betriebssituation verwendet werden. Vorzugsweise wird sie aber erst als geeignete Betriebssituation verwendet, wenn sie bestätigt wurde.

Insbesondere wird vorgeschlagen, dass Betriebssituationen dadurch eingestellt werden, dass aktuelle Umweltbedingungen erfasst werden und Anlageneinstellungen der Windenergieanlage so eingestellt werden, dass eine abgespeicherte bestätigte geeignete Betriebssituation eingestellt wird. Es wird also das Auswählen und Einstellen von Anlageneinstellungen in Abhängigkeit von erfassten Umweltbedingungen erst dann entsprechend einer geeigneten Betriebssituation vorgenommen, wenn die geeignete Betriebssituation bestätigt wurde.

Gemäß einem Aspekt wird vorgeschlagen, dass das Verfahren in einem nicht einspeisenden Zustand der Windenergieanlage durchgeführt wird, wenn die Windenergieanlage keine Leistung erzeugt und/oder keine Leistung in ein elektrisches Versorgungsnetz einspeist, insbesondere in einem Inbetriebnahmezeitraum, in dem die Windenergieanlage bereits fertiggestellt ist, aber noch nicht an das elektrische Versorgungsnetz angeschlossen ist und daher noch keine elektrische Leistung in das elektrische Versorgungsnetz eingespeist werden kann, insbesondere in einem Zeitbereich von bis zu 6 Monaten, insbesondere bis zu 3 Monaten nach der Fertigstellung. Die Fertigstellung kann auch als Errichtung oder vollständige Errichtung der Windenergieanlage bezeichnet werden.

Hier wurde besonders erkannt, dass die Windenergieanlage vor dem Anschluss an das elektrische Versorgungsnetz im Stillstand unterschiedlichen Umweltbedingungen, insbesondere Windbedingungen ausgesetzt ist. Besonders in einer solchen Situation können problematische Betriebssituationen auftreten, insbesondere Schwingungen auftreten, die in einem Normalbetrieb der Windenergieanlage nicht auftreten. Besonders können hier seitliche Anströmungen auftreten und/oder Anströmungen an ruhende Rotorblätter auftreten, die zu problematischen Betriebssituationen führen können. Daher wird das vorgeschlagene Verfahren besonders für den Inbetriebnahmezeitraum vorgeschlagen.

Außerdem oder alternativ wird das Verfahren in einer Umbausituation durchgeführt, wenn die Windenergieanlage arretiert wird, insbesondere, wenn zumindest der Rotor arretiert wird. Hier wurde erkannt, dass solche Umbausituationen für längere Zeit, oftmals für mehrere Tage, vorgesehen sind. In der Zeit kann die Windenergieanlage nicht betrieben werden. Selbst manche Aktuatoren zum Ändern der Anlageneinstellungen sind dann inaktiv. In dieser Situation ist möglichst eine Anlageneinstellung zu wählen, bei der keine zu starken Oszillationen auftreten.

Gemäß einem Aspekt wird vorgeschlagen, dass die gespeicherten, zu vermeidenden und/oder die gespeicherten geeigneten Betriebssituationen, zumindest einige davon, von wenigstens einer baugleichen oder ähnlichen Windenergieanlage empfangen wurden.

Hier liegt der Gedanke zugrunde, dass die zu vermeidenden und/oder geeigneten Betriebssituationen besonders gut aus tatsächlich aufgetretenen Betriebssituationen identifiziert werden können. Besonders für den Fall, dass das Verfahren für die Inbetriebnahmephase vorgesehen ist, bleibt wenig Zeit, zu vermeidende und/oder geeignete Betriebssituationen aufzunehmen. Daher wird vorgeschlagen, solche Betriebssituationen von wenigstens einer anderen baugleichen Windenergieanlage zu nehmen, insbesondere solche Betriebssituationen von möglichst vielen baugleichen Windenergieanlagen zu sammeln. Dadurch kann trotz einer kurzen Inbetriebnahmephase eine Datenbank mit vielen verschiedenen Betriebssituationen angelegt werden.

Wird eine neue Windenergieanlage errichtet, kann sie bereits auf viele abgespeicherte zu vermeidende und/oder geeignete Betriebssituationen zurückgreifen.

Grundsätzlich unterscheidet sich das Anlagenverhalten von Windenergieanlagen auch in Abhängigkeit vom verwendeten Standort. Es wurde aber erkannt, dass die Übertragbarkeit solcher Betriebssituationen von einer baugleichen Windenergieanlage zu einer anderen, die an einem anderen Aufstellort aufgestellt ist, dennoch gut gegeben sein kann. Das ist besonders dadurch möglich, dass diverse Umweltbedingungen aufgenommen werden, wodurch Standortunterschiede Berücksichtigung finden können.

Gemäß einem Aspekt wird vorgeschlagen, dass ein Warnsignal ausgegeben wird, wenn eine zu vermeidende Betriebssituation eingestellt wird oder sich eine zu vermeidende Betriebssituation durch verändernde Umweltbedingungen ergibt oder sie zu erwarten ist.

Ein solches Warnsignal kann auch über eine Datenübertragung an eine Leitstelle oder andere zur Überwachung verwendete Stelle übertragen werden. Insbesondere eine Übertragung in einem SCADA-System kommt hier in Betracht. Dadurch kann eine entsprechende ungünstige Betriebssituation noch verhindert werden. Durch das Warnsignal ist es möglich, dass Servicepersonal das Problem erkennt und eine individuelle Lösung findet. Insbesondere kann hier vollautomatisch erkannt werden, dass eine zu vermeidende Betriebssituation eingestellt werden soll, individuell aber durch Servicepersonal eine geeignetere Betriebssituation, also geeignete Anlageneinstellungen gefunden werden.

Gemäß einem Aspekt wird vorgeschlagen, dass ein Erfassen und Abspeichern zu vermeidender Betriebssituationen und/oder ein Erfassen und Abspeichern geeigneter, insbesondere bestätigter geeigneter Betriebssituationen, bei sich ändernden Umweltbedingungen laufend wiederholt wird, um dadurch einen Datenpool mit zu vermeidenden und/oder geeigneten, insbesondere bestätigten geeigneten Betriebssituationen aufzubauen.

Dadurch kann im laufenden Betrieb ein solcher Datenpool aufgebaut werden. Die Datenlage für zu vermeidende und/oder geeignete Betriebssituationen kann dadurch kontinuierlich verbessert werden. Insbesondere kann eine solche kontinuierliche Verbesserung der Datenlage dadurch erreicht werden, dass eine Windenergieanlage dabei jeweils auf einem existierenden Datenpool aufbauen kann, der von baugleichen oder ähnlichen Windenergieanlagen bereits erstellt wurde. Baugleiche oder ähnliche Windenergieanlagen sind besonders, nicht nur für diesen Aspekt, sondern ganz allgemein, solche, bei denen der mechanische Aufbau, insbesondere Rotorblätter und Gondel, mechanisch gleich sind, also gleiche Bauform und gleiches Material aufweisen. Der Datenpool kann erweitert werden und schließlich an die nächste Windenergieanlage übergeben werden, die in einer Inbetriebnahmephase ist. Diese Windenergieanlage kann dann ebenfalls ihrerseits den Datenpool ergänzen. Ein Datenpool könnte auch zentral verwaltet und/oder gespeichert werden, bspw. auf einem zentralen Server.

Gemäß einem Aspekt wird vorgeschlagen, dass zu vermeidende Betriebssituationen und/oder geeignete, insbesondere bestätigte geeignete Betriebssituationen, durch Simulationen erfasst und dann abgespeichert werden. Vorzugsweise wird vorgeschlagen, dass außerdem zu vermeidende Betriebssituationen und/oder geeignete, insbesondere bestätigte geeignete Betriebssituationen durch Messungen erfasst und abgespeichert werden. Durch die Simulationen können einige Betriebssituationen überprüft werden und dadurch kann ein erster Datensatz geschaffen werden. Dadurch ist es bereits möglich, zu vermeidende Betriebssituationen zu vermeiden. Es ist besonders auch möglich, gut und sicher zu simulierende Betriebssituationen zu modellieren, um einige geeignete Betriebssituationen zu finden. Damit kann bereits ein gesicherter Betrieb erreicht werden.

Zur Verbesserung der Datenlage können zusätzlich Messungen durchgeführt werden, zu vermeidende und/oder geeignete Betriebssituationen dadurch besser erkannt werden. Hier wurde besonders erkannt, dass eine Simulation nicht mit beliebiger Genauigkeit und der Berücksichtigung beliebig vieler Umweltbedingungen und/oder Anlageneinstellungen durchgeführt werden kann. Hier können Kapazitätsgrenzen für solche Simulationen auftreten und/oder Simulationen ungenau werden. Es kommt auch in Betracht, dass es nicht oder schwierig möglich ist, all die vielen Umweltbedingungen und Anlageneinstellungen zugleich in einer Simulation zu berücksichtigen. Durch die Kombination von Simulationen und Messungen können die Vorteile der beiden Verfahren kombiniert werden. Insbesondere kann der Vorteil der Simulation, Betriebssituationen vorab zu bestimmen, mit dem Vorteil der Messungen kombiniert werden, Betriebssituationen besonders genau einschätzen zu können bzw. aufnehmen zu können.

Gemäß einem Aspekt wird vorgeschlagen, dass kritische Betriebssituationen erfasst werden und aus einer erfassten kritischen Betriebssituation auf eine zu vermeidende Betriebssituation geschlossen wird. Kritische Betriebssituationen sind dabei solche, bei denen eine Oszillation der Komponente der Windenergieanlage, insbesondere wenigstens eines der Rotorblätter, mit einer Amplitude auftritt, die oberhalb der vorgebbaren Amplitudenschwelle liegt, aber unterhalb der Amplitudengrenze, die insoweit größer als die Amplitudenschwelle ist. Die Amplitude ist also schon hoch, aber noch nicht so hoch, dass sie als gefährdend einzustufen ist. Sie ist aber auch schon so hoch, dass sie nicht mehr als unkritisch angesehen werden kann.

Auch für die kritischen Betriebssituationen kommt in Betracht, alternativ oder zusätzlich zur Überprüfung auf eine Schwingung bzw. Oszillation auf eine absolute Belastung, insbesondere auf eine absolute Biegung oder Deformation zu prüfen. Auch hier kann in jedem Fall eine Erfassung über eine Beschleunigung erfolgen, und/oder mittels Dehnungssensoren wie Dehnungsmessstreifen. Die Beschleunigung kann in eine Oszillation umgerechnet werden und/oder es kann ein auf die Beschleunigung umgerechneter Grenzwert verwendet werden.

Eine solche kritische Betriebssituation deutet somit darauf hin, dass eine zu vermeidende Betriebssituation in der Nähe sein kann. Eine zu vermeidende Betriebssituation könnte also bei geringer Veränderung zumindest einer der Anlageneinstellungen auftreten.

Davon ausgehend kann somit auf eine zu vermeidende Betriebssituation geschlossen werden.

Besonders kann dies so erfolgen, dass wenigstens eine Anlageneinstellung verändert wird, und aus einer daraus resultierenden Zunahme oder Abnahme der Amplitude der Oszillation auf eine zu vermeidende Betriebssituation geschlossen wird, insbesondere ohne sie einzustellen.

Liegt also beispielsweise eine Situation vor, bei der an einem Rotorblatt eine hohe Oszillation aufgetreten ist, kann über die Verstellung einer Anlageneinstellung getestet werden, ob die Oszillation zunimmt oder abnimmt. Nimmt sie zu, wenn beispielsweise der Blattwinkel des betreffenden Rotorblattes, an dem die Oszillation auftritt, weiter erhöht wird, kann daraus geschlossen werden, dass bei noch weiterer Erhöhung die Amplitudengrenze erreicht wird. Diese noch weitere Erhöhung wird aber nicht durchgeführt, sondern nur angenommen, dass bei dieser weiteren Erhöhung eine zu vermeidende Betriebssituation auftritt, die somit nur antizipiert wird. Diese antizipierte Betriebssituation kann dann als zu vermeidende Betriebssituation abgespeichert werden. Es ist dann eine zu vermeidende Betriebssituation gespeichert, ohne dass diese tatsächlich jemals eingestellt war oder in einer Simulation geprüft wurde.

Hier wurde besonders erkannt, dass in der Inbetriebnahme, wenn die Windenergieanlage also noch gar keine Leistung erzeugt oder einspeist, viele Anlageneinstellungen möglich sind. Es ist daher vertretbar, eine Betriebssituation als zu vermeidende Betriebssituation abzuspeichern, obwohl nur erwartet wurde, dass diese Betriebssituation eine zu vermeidende ist. Eine Überprüfung könnte dazu führen, dass die antizipierte Betriebssituation tatsächlich doch keine zu vermeidende Betriebssituation wäre. Sie würde dann fälschlich als zu vermeidende Betriebssituation abgespeichert werden. Da aber viele Einstellmöglichkeiten für die Anlageneinstellungen existieren, ist es besser, auch eine solche Betriebssituation vorsichtshalber als zu vermeidende Betriebssituation abzuspeichern und entsprechend zu berücksichtigen, also zu vermeiden.

Erfindungsgemäß wird auch eine ganz oder teilweise errichtete Windenergieanlage vorgeschlagen. Die Windenergieanlage weist einen Rotor mit mehreren in ihrem Blattwinkel verstellbaren Rotorblättern auf, wobei die Windenergieanlage dazu vorbereitet ist, ein Verfahren zum Einstellen der Windenergieanlage auszuführen. Insbesondere wird vorgeschlagen, dass die Windenergieanlage wenigstens soweit erreichtet ist, dass wenigstens eines der mehreren Rotorblätter montiert ist.

Die Windenergieanlage kann veränderliche Betriebssituationen einnehmen, und jede Betriebssituation ist durch eine Kombination aus einstellbaren Anlageneinstellungen der Windenergieanlage und erfassbaren Umweltbedingungen gekennzeichnet, sodass zu gegebenen Umweltbedingungen eine Betriebssituation durch Einstellen der Anlageneinstellungen einstellbar ist. Zu vermeidende und/oder geeignete Betriebssituationen sind in einem Speicher abgespeichert, indem jeweils zu einer zu vermeidenden Betriebssituation eine Kombination aus Umweltbedingungen und Anlageneinstellungen als zu vermeidende Kombination abgespeichert ist, und/oder jeweils zu einer geeigneten Betriebssituation eine Kombination aus Umweltbedingungen und Anlageneinstellungen als geeignete Kombination abgespeichert ist. Mit dem Verfahren werden zum Vermeiden von zu vermeidenden Betriebssituationen Umweltbedingungen erfasst. In Abhängigkeit von den erfassten Umweltbedingungen und den abgespeicherten zu vermeidenden und/oder geeigneten Kombinationen werden Anlageneinstellungen der Windenergieanlage so ausgewählt und eingestellt, dass Anlageneinstellungen abgespeicherter zu vermeidender Kombinationen vermieden werden, und/oder Anlageneinstellungen aus abgespeicherten geeigneten Kombinationen ausgewählt werden.

Insbesondere weist die Windenergieanlage eine Anlagensteuerung auf und ist dazu vorbereitet, ein Verfahren nach einer der vorstehend beschriebenen Ausführungsformen auszuführen. Insbesondere kann die Anlagensteuerung dazu vorbereitet sein.

Die Windenergieanlage bzw. ihre Anlagensteuerung können dadurch zum Ausführen des vorgeschlagenen Verfahrens vorbereitet sein, dass dieses Verfahren auf einem Prozessrechner implementiert ist, der Teil der Windenergieanlage, insbesondere Teil der Anlagensteuerung ist. Es kommt auch in Betracht, dass der Prozessrechner die Anlagensteuerung beinhaltet.

Außerdem weist die Windenergieanlage bzw. ihre Anlagensteuerung dazu Schnittstellen oder Verbindungen zu Erfassungseinrichtungen, insbesondere Messsensoren auf. Außerdem oder alternativ kann dazu eine Kommunikation zu Anbietern von Wettervorhersagen existieren und/oder eine Kommunikation zu einer Parksteuerung und/oder einer Leitstelle.

Die Erfindung wird nachfolgend anhand von Ausführungsformen unter Bezugnahme auf die begleitenden Figuren beispielhaft näher erläutert.
- Figur 1: zeigt eine Windenergieanlage in einer perspektivischen Darstellung.
- Figur 2: zeigt ein Ablaufdiagramm zum Einteilen und Speichern von Betriebssituationen.
- Figur 3: zeigt ein Ablaufdiagramm zum Auswählen einer Kombination aus gespeicherten Umweltbedingungen und Anlageneinstellungen.

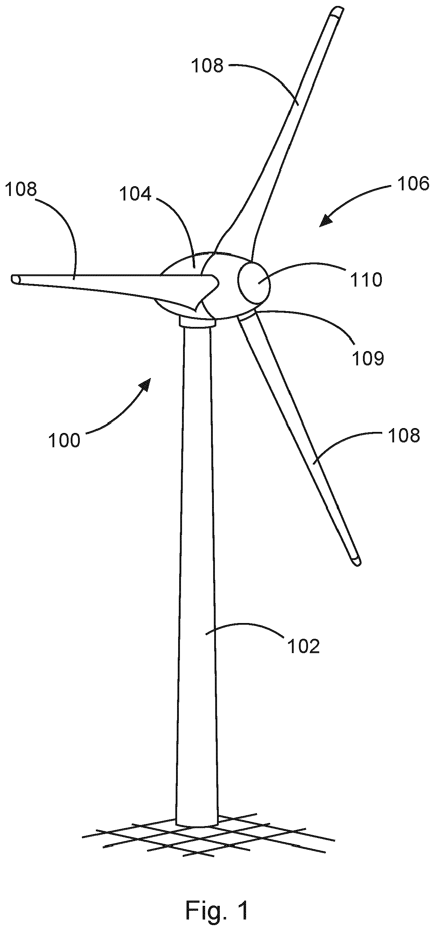

Figur 1 zeigt eine Windenergieanlage 100 mit einem Turm 102 und einer Gondel 104. An der Gondel 104 ist ein Rotor 106 mit drei Rotorblättern 108 und einem Spinner 110 angeordnet. Der Rotor 106 wird im Betrieb durch den Wind in eine Drehbewegung versetzt und treibt dadurch einen Generator in der Gondel 104 an.

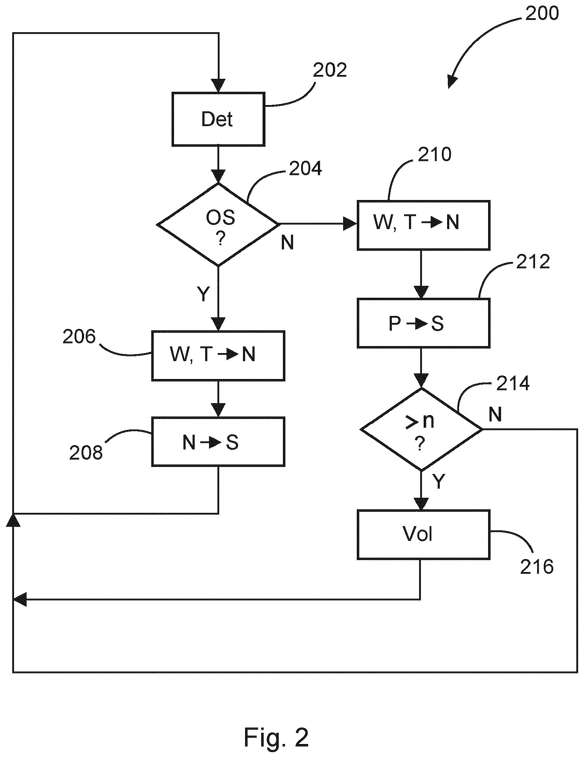

Figur 2 zeigt ein Ablaufdiagramm 200 zum Abspeichern von zu vermeidenden und geeigneten Betriebssituationen. In dem Detektionsschritt 202 werden Eigenschaften der Windenergieanlage erfasst, insbesondere Schwingungen der Rotorblätter. Die so erfassten Daten, insbesondere Schwingungsamplituden, werden an den Bewertungsschritt 204 übergeben. In dem Bewertungsschritt 204 wird bewertet, ob eine die Windenergieanlage gefährdende Situation vorliegt, insbesondere, ob wenigstens eine der erfassten Oszillationen eine gefährdende Amplitude aufweist, insbesondere eine Amplitude, die eine Grenzamplitude erreicht oder überschreitet.

Wurde eine solche gefährdende Situation, insbesondere gefährdende Amplitude der Oszillation in dem Bewertungsschritt 204 erkannt, wird zum Negativergebnisschritt 206 verzweigt. In dem Negativergebnisschritt 206 werden die Umweltbedingungen und die Anlageneinstellungen der aktuellen Betriebssituation als negative und damit zu vermeidende Kombination zusammengefasst.

Im nachfolgenden Negativspeicherschritt 208 wird diese zu vermeidende Kombination abgespeichert und dabei auch als zu vermeidende Kombination gekennzeichnet. Diese Kennzeichnung kann einfach dadurch erfolgen, dass die Negativkombination in einem entsprechenden Unterspeicher abgespeichert wird, in dem nur negative, also zu vermeidende Kombinationen abgespeichert werden.

Das Verfahren kehrt dann zum Detektionsschritt 202 zurück und der Ablauf beginnt von vorn. Besonders erfolgt eine neue Erfassung und Detektion, sobald sich wenigstens eine Betriebssituation verändert hat und/oder sobald eine Mindestwiederholzeit abgelaufen ist, die vorzugsweise im Bereich von wenigstens 5 Minuten liegt.

Wird im Bewertungsschritt 204 festgestellt, dass keine gefährdenden Amplituden vorliegen oder keine anderen gefährdenden Situationen erfasst wurden, verzweigt der Ablauf zum Positivergebnisschritt 210. In Positivergebnisschritt 210 werden die Umweltbedingungen und Anlageneinstellungen der aktuellen Betriebssituation als positive Kombination zusammengefasst.

Im anschließenden Positivspeicherschritt 212 wird diese positive Kombination als geeignete Kombination abgespeichert und als geeignete Kombination gekennzeichnet. Die Kennzeichnung als geeignete Kombination kann auch hier dadurch erfolgen, dass ein entsprechender Unterspeicher verwendet wird, der nicht einem Unterspeicher entspricht, der in dem Negativspeicherschritt 208 für die zu vermeidende Kombination verwendet wurde.

Es kommen aber auch andere Varianten in Betracht, sowohl für den Negativspeicherschritt 208 als auch für den Positivspeicherschritt 212, in dem ein Attribut mit abgespeichert wird, um nur ein weiteres Beispiel zu nennen.

An den Positivspeicherschritt 212 schließt sich ein Verifikationsschritt 214 an. In dem Verifikationsschritt 214 wird geprüft, ob die positive Kombination schon öfter als eine vorbestimmte Auftrittsanzahl n aufgetreten ist. Die Auftrittsanzahl kann auch den Wert 1 annehmen, vorzugsweise wird sie im Bereich von 2 bis 5 gewählt.

Ist die aktuelle Kombination häufiger als die Auftrittsanzahl n aufgetreten, verzweigt der Verifikationsschritt 214 zum Validierungsschritt 216. Im Validierungsschritt 216 wird die geeignete Kombination der aktuellen Betriebssituation als bestätigte geeignete Kombination gekennzeichnet. Auch dies kann durch ein Attribut erfolgen, das zu der Kombination mit abgespeichert wird.

Wenn diese Kombination also schon mehrfach aufgetreten ist, nämlich als geeignete Kombination, bedeutet das auch, dass sie bereits abgespeichert war. In diesem Fall kann in dem Positivspeicherschritt 212 vorgesehen sein, lediglich festzustellen, dass die Kombination bereits abgespeichert ist, und einen mit der Kombination abgespeicherten Zähler um einen Wert zu erhöhen. Dieser so erhöhte Zähler kann in dem Verifikationsschritt 214 abgeprüft werden, um festzustellen, ob die Auftrittsanzahl n überschritten wurde.

Nach dem Validierungsschritt 216 kehrt die Routine ebenfalls zum Detektionsschritt 202 zurück.

Ist im Verifikationsschritt 214 festgestellt worden, dass die Auftrittsanzahl n noch nicht überschritten wurde, passiert nichts weiter und die Kombination der aktuellen Betriebssituation bleibt als geeignete Kombination abgespeichert und ihr Attribut wird nicht auf bestätigte geeignete Kombination verändert, sondern sie bleibt eine unbestätigte geeignete Kombination. Das Ablaufdiagramm kehrt dann lediglich direkt von dem Verifikationsschritt 214 zum Detektionsschritt 202 zurück.

Durch die im Ablaufdiagramm 200 zum Abspeichern geschilderte Routine werden Betriebssituationen in zu vermeidende Betriebssituationen, geeignete Betriebssituationen und bestätigte geeignete Betriebssituationen unterteilt und entsprechend abgespeichert. Dazu wird entsprechend jeweils eine zu vermeidende Kombination, eine geeignete Kombination oder eine bestätigte geeignete Kombination abgespeichert bzw. als solche gekennzeichnet.

Für den unwahrscheinlichen Fall, dass in dem Bewertungsschritt 204 eine gefährdende Amplitude oder andere gefährdende Situation erkannt wurde, und die zugehörige Kombination bereits als geeignete Kombination abgespeichert war, so wird diese als zu vermeidende Kombination überschrieben.

Für den unwahrscheinlichen Fall, dass im Bewertungsschritt 204 keine gefährdende Amplitude oder andere gefährdende Situation erkannt wurde, zu der zugehörigen Kombination aber bereits eine zu vermeidende Kombination abgespeichert ist, so wird diese zu vermeidende Kombination im Speicher als zu vermeidende Kombination belassen. Es kann nun vorgesehen sein, einen entsprechenden Hinweis auszugeben, sodass eine Überprüfung durchgeführt werden kann. Zunächst wird aber die zu vermeidende Kombination als solche im Speicher beibehalten.

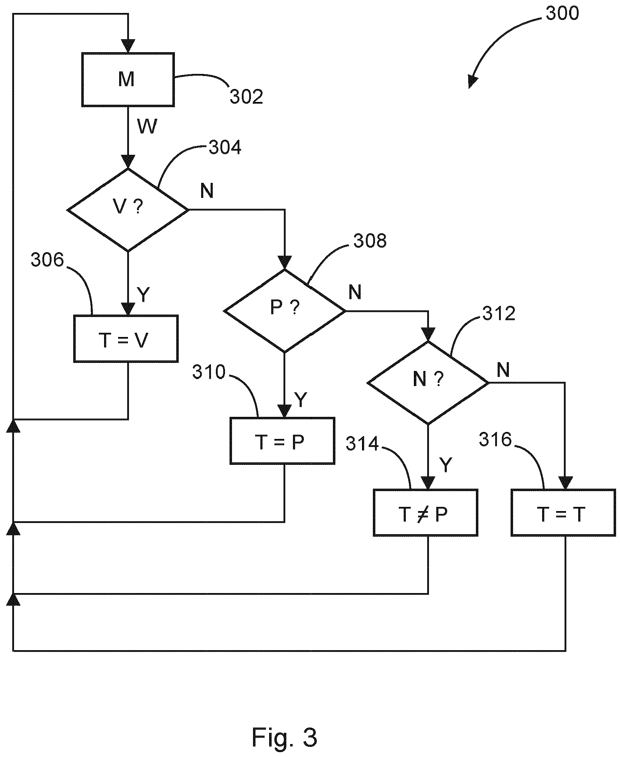

Figur 3 zeigt ein Ablaufdiagramm 300 zum Erläutern des Auswählens und Einstellens von Anlageneinstellungen in Abhängigkeit von erfassten Umweltbedingungen und abgespeicherten zu vermeidenden und geeigneten Kombinationen.

Im Erfassungsschritt 302 werden aktuelle oder zukünftige Umweltbedingungen, zu denen Anlageneinstellungen vorgenommen werden müssen, erfasst, insbesondere gemessen.

Mit diesen Umweltbedingungen W geht das Ablaufdiagramm 300 in den Verifikationsabfrageschritt 304 über. In dem Verifikationsabfrageschritt 304 wird geprüft, ob zu den erfassten Umweltbedingungen eine bestätigte geeignete Kombination abgespeichert ist. Wenn das der Fall ist, verzweigt der Verifikationsabfrageschritt 304 zum bestätigten Zuordnungsschritt 306.

Wenn in dem Verifikationsabfrageschritt 304 zu den erfassten Umweltbedingungen W mehrere bestätigte geeignete Kombinationen erkannt wurden, also mehrere bestätigte geeignete Kombinationen abgespeichert sind, kann zwischen diesen über ein weiteres Auswahlkriterium ausgewählt werden, was in dem Ablaufdiagramm 300 nicht dargestellt ist. Als Kriterium kann verwendet werden, wie oft die jeweilige Kombination als geeignete Kombination erkannt wurde. Dazu kann die Kombination einen entsprechenden Zähler mit abgespeichert haben. Dieser kann, wie in Figur 2 im Zusammenhang mit dem Positivspeicherschritt 212 erläutert wurde, hochgezählt werden.

Es kommt auch in Betracht, dass bevorzugte Grundeinstellungen hinterlegt sind und von den im Speicher gefundenen Kombinationen die gewählt wird, bei der die Anlageneinstellungen den Grundeinstellungen am nächsten sind. Es kommt auch in Betracht, dass eine Kombination gewählt wird, bei der die Anlageneinstellungen den aktuellen Anlageneinstellungen am ähnlichsten sind. Auch dies sind nur weitere Beispiele für mögliche Auswahlkriterien.

Im bestätigten Zuordnungsschritt 306 werden die Anlageneinstellungen T auf die Anlageneinstellungen V gemäß der abgespeicherten bestätigten geeigneten Kombination eingestellt. Die Routine gemäß dem Ablaufdiagramm 300 ist damit erfüllt, aber der Vorgang kann bei geänderten Umweltbedingungen wiederholt werden, sodass die Routine zurück zum Erfassungsschritt 302 geht und die Routine mit Erfassen der Umweltbedingungen wiederholt wird.

Wurde im Verifikationsabfrageschritt 304 keine bestätigte geeignete Kombination zu den erfassten Umweltbedingungen W erkannt, erfolgt eine weitere Abfrage gemäß dem Positivabfrageschritt 308.

Im Positivabfrageschritt 308 wird dann geprüft, ob zu den erfassten Umweltbedingungen W eine geeignete Kombination abgespeichert ist. Falls das der Fall ist, verzweigt der Positivabfrageschritt 308 zum Positivzuordnungsschritt 310. Im Positivzuordnungsschritt 310 werden die Anlageneinstellungen T auf die Einstellungen P der gefundenen abgespeicherten geeigneten Kombination gesetzt. Auch hier kann ein weiteres Auswahlkriterium berücksichtigt werden, wie dies zum Verifikationsabfrageschritt 304 erläutert wurde, sollten in dem Positivabfrageschritt mehrere geeignete Kombinationen gefunden worden sein.

Der Positivabfrageschritt 308 prüft somit auf geeignete Kombinationen, die nicht verifiziert, also nicht bestätigt sein müssen. Da der Positivabfrageschritt 308 nur erfolgt, wenn der Verifikationsabfrageschritt 304 keine bestätigten geeigneten Kombinationen gefunden hat, dürfte der Positivabfrageschritt 308 auch keine bestätigten geeigneten Kombinationen finden, sondern nur unbestätigte geeignete Kombinationen. Eine solche wird entsprechend in dem Positivzuordnungsschritt 310 verwendet.

Auch hier führt die Routine nach dem Positivzuordnungsschritt 310 zurück zum Erfassungsschritt 302.

Wurde auch keine geeignete Kombination in dem Positivabfrageschritt 308 gefunden, geht die Routine über zum Negativabfrageschritt 312. In dem Negativabfrageschritt 312 wird geprüft, ob zu den erfassten Umweltbedingungen W eine zu vermeidende Kombination abgespeichert wurde. Ist das der Fall, werden im Negativzuordnungsschritt 314 Anlageneinstellungen ausgewählt, die keiner zu vermeidenden Kombination entsprechen, die zu den erfassten Umweltbedingungen abgespeichert wurden.

Somit ist in dem Negativabfrageschritt 312 auf sämtliche zu vermeidenden Kombinationen zu prüfen, die zu den erfassten Umweltbedingungen abgespeichert sind, damit die Anlageneinstellungen T keinem Satz Anlageneinstellungen der abgespeicherten zu vermeidenden Kombinationen entspricht.

Die Anlageneinstellungen werden dann unter den verbleibenden Möglichkeiten ausgewählt, die somit bisher noch nicht überprüft wurden. Zur konkreten Auswahl können hier Kriterien herangezogen werden, die auch oben im Zusammenhang sowohl mit dem Verifikationsabfrageschritt 304 als auch dem Positivabfrageschritt 308 erläutert wurden. Hier kann zudem die Auswahl so getroffen werden, dass Anlageneinstellungen möglichst stark von den gespeicherten zu vermeidenden Kombinationen abweichen bzw. von den dort jeweils enthaltenen Sätzen von Anlageneinstellungen abweichen.

Nach dem Negativzuordnungsschritt 314 kehrt die Routine zum Erfassungsschritt 302 zurück.

Wurde im Negativabfrageschritt 312 keine zu vermeidende Kombination gefunden, bedeutet das zunächst, dass zu den erfassten Umweltbedingungen keinerlei Kombinationen abgespeichert wurden. Die Routine verzweigt dann zum Normalzuordnungsschritt 316. Dort kann im Grunde eine beliebige Auswahl der Anlageneinstellungen T getroffen werden. Im einfachsten Fall bleiben die Anlageneinstellungen T einfach unverändert.

Schließlich kehrt die Routine auch nach dem Normalzuordnungsschritt 316 zum Erfassungsschritt 302 zurück.

Der Erfindung liegen somit die folgenden Überlegungen zu Grunde und es werden erfindungsgemäß die folgenden Vorschläge gemacht und weitere Erläuterungen gegeben.

Es wird Folgendes vorgeschlagen: Kritische Zustände, die an Windenergieanlagen, die auch als WEA bezeichnet werden können, im Feld auftreten, werden in einer Matrix von No-Go-Situationen zusammengeführt. Kritische Zustände bzw. No-Go-Situationen sind somit zu vermeidende Betriebszustände. Ebenso könnten auch (zusätzlich oder alternativ) nicht kritische Situationen in einer Matrix von sicheren Zuständen zusammengeführt werden. Sichere Zustände sind somit geeignete Betriebszustände. Die WEA und/oder Service- /Aufbauteams/ oder andere interessierte Personen oder Einheiten orientieren sich an diesen Matrizen. Somit wird vermieden, dass die WEA in No-Go-Situationen gelangen. Jede Matrix steht repräsentativ für einen Speicher, in dem die Situationen, bzw. zugehörige Daten, abgespeichert werden, insbesondere in einer Tabelle, was durch den Begriff der Matrix hervorgehoben werden soll.

### Beispiel 1:

- Die Rotorblätter einer WEA fangen in einer Situation mit arretiertem Rotor an sich aufzuschwingen.
- Die WEA detektiert dieses Verhalten als gefährlich
- und meldet erfasste Randbedingungen wie bspw. Pitchwinkel der Rotorblätter, Rotorazimutstellung, Gondelfehlstellung zum Wind, Windgeschwindigkeit, wobei eine Gondelfehlstellung eine Winkelabweichung zwischen Azimutausrichtung der Gondel und der Windgeschwindigkeit bezeichnet.
- Diese Informationen werden in einer Matrix an No-Go-Situationen zusammengeführt.
- Sollte die gleiche oder eine andere WEA (gleichen Typs) arretiert werden, wird darauf geachtet, dass diese und weitere bereits gespeicherte No-Go-Situationen vermieden werden.
   - Beispielsweise könnte die WEA das Arretieren des Rotors bei bestimmten Windrichtungen, Pitchwinkeln, Rotorazimutpositionen unterbinden oder zumindest auf die Gefährlichkeit dieser Situation hinweisen.
   - Außerdem oder alternativ kommt in Betracht, dass Service-/Aufbauteams über diese No-Go-Situationen in Kenntnis gesetzt werden und orientieren sich daran.

### Beispiel 2:

- An einer WEA ist über mehrere Tage der Rotor arretiert.
- Während dieser Zeit überwacht sich die WEA zwar selbst auf kritische Situationen, aber es wird kein gefährliches Verhalten detektiert.
- Die erfassten Randbedingungen wie bspw. Pitchwinkel der Rotorblätter, Rotorazimutstellung, Gondelfehlstellung zum Wind, Windgeschwindigkeit werden als potentiell sicherer Zustand gemeldet.
- Werden diese Randbedingungen mehrfach als potentiell sicherer Zustand gemeldet, wird angenommen, dass diese Randbedingungen tatsächlich sicher für die WEA sind und dementsprechend in der Matrix von sicheren Zuständen gespeichert. Sichere Zustände entsprechen somit bestätigten geeigneten Betriebszuständen, also geeigneten Betriebszuständen, die verifiziert wurden.
- Sollte anschließend eine WEA dieses Typs wegen Umbaumaßnahmen über mehrere Tage arretiert werden, und die prognostizierten Windbedingungen und weitere Rahmenbedingungen auf der Baustelle lassen es zu, wird gezielt einer der Zustände aus der Matrix an sicheren Zuständen angefahren.

### Beispiel 3:

- Durch eine Vielzahl an Versuchen an beispielsweise Prototypen-WEA wird ermittelt, welche Zustände für die WEA kritisch sein können und welche Zustände eher als sicherer Zustand einzustufen wären.
- Die kritischen Zustände werden in der "No-Go-Matrix" zusammengeführt, die sicheren in der "Matrix sicherer Zustände".

Die Erfindung ist besonders vorgesehen für Situationen, bei denen sich ein oder mehrere Rotorblätter in Idling- oder rotorarretierten Situationen unzulässig stark aufschwingen können.

Im Allgemeinen bietet die erfindungsgemäße Lösung die Möglichkeit, die in erster Linie durch Simulationen oder auf anderem Wege getroffenen Annahmen über "No-Go-Gebiete" und "Situationen sicherer Zustände" durch Messungen an realen Anlagen kontinuierlich zu verbessern.

Es kann die erfindungsgemäße Lösung auch für bspw. Turmschwingungen angewendet werden, die zum Beispiel während des Aufbaus der WEA auftreten könnten.

Folgendes Beispiel dient der weiteren Erläuterung: Angenommen sei, dass man für einen bestimmten Turm im Vorfeld für einen bestimmten Aufbauzustand ermittelt hatte, dass dieserAufbauzustand nur bis zu 12 m/s zulässig ist, da man annahm, dass bei Windgeschwindigkeiten > 12 m/s unzulässig starke Turmschwingungen auftreten könnten.

Nun wird auf der Baustelle festgestellt, dass sich der Turm bereits bei 10 m/s unzulässig stark aufschwingt.

Diese Erkenntnis wird in einer entsprechenden No-Go-Matrix gespeichert und steht somit für zukünftige Turminstallationen zur Verfügung.

Erfindungsgemäß können Schäden an WEA vermieden werden.

## Patentansprüche

1. Verfahren zum Einstellen einer einen Rotor mit mehreren in ihrem Blattwinkel verstellbaren Rotorblättern aufweisenden ganz oder teilweise errichteten Windenergieanlage,
wobei die Windenergieanlage veränderliche Betriebssituationen einnehmen kann, und
jede Betriebssituation durch eine Kombination aus einstellbaren Anlageneinstellungen der Windenergieanlage und erfassbaren Umweltbedingungen gekennzeichnet ist, sodass
zu gegebenen Umweltbedingungen eine Betriebssituation durch Einstellen der Anlageneinstellungen einstellbar ist, und
zu vermeidende und/oder geeignete Betriebssituationen in einem Speicher abgespeichert sind, indem
- jeweils zu einer zu vermeidenden Betriebssituation eine Kombination aus Umweltbedingungen und Anlageneinstellungen als zu vermeidende Kombination abgespeichert ist, und/oder
- jeweils zu einer geeigneten Betriebssituation eine Kombination aus Umweltbedingungen und Anlageneinstellungen als geeignete Kombination abgespeichert ist, und
zum Vermeiden von zu vermeidenden Betriebssituationen
- Umweltbedingungen erfasst werden und
- in Abhängigkeit von den erfassten Umweltbedingungen und den abgespeicherten zu vermeidenden und/oder geeigneten Kombinationen
Anlageneinstellungen der Windenergieanlage so ausgewählt und eingestellt werden, dass
- Anlageneinstellungen abgespeicherter zu vermeidender Kombinationen vermieden werden, und/oder
- Anlageneinstellungen aus abgespeicherten geeigneten Kombinationen ausgewählt werden.

2. Verfahren nach Anspruch 1, **dadurch gekennzeichnet, dass** als Umweltbedingungen
- Windgeschwindigkeit und
- Windrichtung betrachtet werden, und optional
- eine Turbulenzintensität,
- Umgebungstemperatur der Windenergieanlage,
- vertikale Windscherung,
- vertikale Windrichtungsscherung,
- ein vertikaler Neigungswinkel des Windes und/oder
- eine Luftdichte.

3. Verfahren nach Anspruch 1 oder 2, **dadurch gekennzeichnet, dass** als Anlageneinstellungen
- ein kollektiver Blattwinkel,
- individuelle Blattwinkel,
- eine Azimutausrichtung der Windenergieanlage,
- eine Rotordrehzahl,
und/oder
- eine Rotorstellung des Rotors betrachtet werden, und optional
- ob der Rotor arretiert ist.

4. Verfahren nach einem der vorstehenden Ansprüche, **dadurch gekennzeichnet, dass**
- die Rotorblätter der Windenergieanlage nach Errichtung der Windenergieanlage, aber vor Anschluss der Windenergieanlage an ein elektrisches Versorgungsnetz mittels einer individuellen Blattverstellung verstellt werden, bei der die Rotorblätter in ihrem Blattwinkel individuell und voneinander unabhängig verstellt werden, wobei
- die Rotorblätter in einem einspeisenden Betrieb, nachdem die Windenergieanlage an das elektrische Versorgungsnetz angeschlossen ist, über Vorgabe eines kollektiven Blattwinkels eingestellt werden, sodass alle Rotorblätter zueinander synchron und mit gleichen Blattwinkeln eingestellt werden.

5. Verfahren nach einem der vorstehenden Ansprüche, **dadurch gekennzeichnet, dass**
- für die zu vermeidenden Kombinationen und/oder geeigneten Kombinationen die Anlageneinstellungen und Umweltbedingungen jeweils als zu vermeidendes bzw. geeignetes Intervall abgespeichert und/oder berücksichtigt werden.

6. Verfahren nach einem der vorstehenden Ansprüche, **dadurch gekennzeichnet, dass**
- die zu vermeidenden Betriebssituationen solche sind, bei denen eine Oszillation wenigstens einer Komponente der Windenergieanlage, insbesondere wenigstens eines der Rotorblätter, mit einer gefährdenden Amplitude zu erwarten ist, insbesondere mit einer Amplitude, die eine vorgebbare Amplitudengrenze erreicht oder übersteigt, und/oder
- wenn eine Oszillation der Komponente, insbesondere wenigstens eines der Rotorblätter, zu einer aktuellen Betriebssituation erfasst wird, insbesondere mit einer Amplitude, die die vorbestimmbare Amplitudengrenze erreicht oder übersteigt,
- die aktuelle Betriebssituation als zu vermeidende Betriebssituation abgespeichert wird, indem eine Kombination aus Anlageneinstellungen und Umweltbedingungen der aktuellen Betriebssituation als zu vermeidende Kombination abgespeichert wird.

7. Verfahren nach einem der vorstehenden Ansprüche, **dadurch gekennzeichnet, dass**
- wenn zu einer aktuellen Betriebssituation keine Oszillation einer bzw. der Komponente der Windenergieanlage, insbesondere wenigstens eines der Rotorblätter, erfasst wird, zumindest nur mit einer Amplitude, die unter einer vorgebbaren Amplitudenschwelle liegt,
- die aktuelle Betriebssituation als geeignete Betriebssituation abgespeichert wird, indem eine Kombination aus Anlageneinstellungen und Umweltbedingungen der aktuellen Betriebssituation als geeignete Kombination abgespeichert wird, wobei optional
- eine abgespeicherte geeignete Betriebssituation als bestätigte geeignete Betriebssituation abgespeichert wird, wenn wiederholt diese abgespeicherte geeignete Betriebssituation aufgetreten ist und dabei keine Oszillation der Komponente bzw. Rotorblätter aufgetreten ist, zumindest nur mit einer Amplitude, die unter der vorgebbaren Amplitudenschwelle liegt, wobei insbesondere Betriebssituationen dadurch eingestellt werden, dass
- Umweltbedingungen erfasst werden und
- Anlageneinstellungen der Windenergieanlage so eingestellt werden, dass eine abgespeicherte bestätigte geeignete Betriebssituation eingestellt wird.

8. Verfahren nach einem der vorstehenden Ansprüche, **dadurch gekennzeichnet, dass**
das Verfahren in einem nicht einspeisenden Zustand der Windenergieanlage durchgeführt wird, wenn die Windenergieanlage keine Leistung erzeugt und/oder keine Leistung in ein elektrisches Versorgungsnetz einspeist, insbesondere
- in einem Inbetriebnahmezeitraum, in dem die Windenergieanlage bereits fertiggestellt ist, aber noch nicht an das elektrische Versorgungsnetz angeschlossen ist und daher noch keine elektrische Leistung in das elektrische Versorgungsnetz eingespeist werden kann, insbesondere in einem Zeitbereich von bis zu 6 Monaten, insbesondere bis zu 3 Monaten nach der Fertigstellung und/oder
- in einer Umbausituation, wenn die Windenergieanlage arretiert wird, insbesondere, wenn zumindest der Rotor arretiert wird.

9. Verfahren nach einem der vorstehenden Ansprüche, **dadurch gekennzeichnet, dass**
- die gespeicherten, zu vermeidenden und/oder geeigneten Betriebssituationen, zumindest einige davon, von wenigstens einer baugleichen Windenergieanlage empfangen wurden.

10. Verfahren nach einem der vorstehenden Ansprüche, **dadurch gekennzeichnet, dass**
ein Warnsignal ausgegeben wird, wenn eine zu vermeidende Betriebssituation eingestellt wird oder sich eine zu vermeidende Betriebssituation durch verändernde Umweltbedingungen ergibt, oder zu erwarten ist.

11. Verfahren nach einem der vorstehenden Ansprüche, **dadurch gekennzeichnet, dass**
- ein Erfassen und Abspeichern zu vermeidender Betriebssituationen und/oder
- ein Erfassen und Abspeichern geeigneter, insbesondere bestätigter geeigneter Betriebssituationen
- bei sich ändernden Umweltbedingungen laufend wiederholt wird, um dadurch einen Datenpool mit zu vermeidenden und/oder geeigneten, insbesondere bestätigten geeigneten Betriebssituationen aufzubauen.

12. Verfahren nach einem der vorstehenden Ansprüche, **dadurch gekennzeichnet, dass**
- zu vermeidende Betriebssituationen und/oder
- geeignete, insbesondere bestätigte geeignete Betriebssituationen
- durch Simulationen erfasst und dann gespeichert werden, wobei vorzugsweise außerdem
- zu vermeidende Betriebssituationen und/oder
- geeignete, insbesondere bestätigte geeignete Betriebssituationen
- durch Messungen erfasst und dann gespeichert werden.

13. Verfahren nach einem der vorstehenden Ansprüche, **dadurch gekennzeichnet, dass**
- kritische Betriebssituationen erfasst werden, wobei kritische Betriebssituationen solche sind, bei denen eine Oszillation einer bzw. der Komponente der Windenergieanlage, insbesondere wenigstens eines der Rotorblätter, mit einer Amplitude auftritt, die oberhalb einer bzw. der vorgebbaren Amplitudenschwelle liegt, aber unterhalb einer bzw. der Amplitudengrenze, die größer als die Amplitudenschwelle ist, und
- aus einer erfassten kritischen Betriebssituation auf eine zu vermeidende Betriebssituation geschlossen wird, insbesondere so, dass
- wenigstens eine Anlageneinstellung verändert wird, und aus einer daraus resultierenden Zunahme oder Abnahme der Amplitude der Oszillation auf eine zu vermeidende Betriebssituation geschlossen wird, insbesondere ohne sie einzustellen.

14. Verfahren nach einem der vorstehenden Ansprüche,
**dadurch gekennzeichnet, dass** sich die Windenergieanlage in einer geparkten Situation befindet, wobei die geparkte Situation insbesondere eine Idling- oder rotorarretierte Situation beschreibt.

15. Windenergieanlage mit einem Rotor mit mehreren in ihrem Blattwinkel verstellbaren Rotorblättern, wobei
die Windenergieanlage dazu vorbereitet ist, ein Verfahren zum Einstellen der Windenergieanlage auszuführen,
die Windenergieanlage veränderliche Betriebssituationen einnehmen kann, und
jede Betriebssituation durch eine Kombination aus einstellbaren Anlageneinstellungen der Windenergieanlage und erfassbaren Umweltbedingungen gekennzeichnet ist, sodass
zu gegebenen Umweltbedingungen eine Betriebssituation durch Einstellen der Anlageneinstellungen einstellbar ist, und
zu vermeidende und/oder geeignete Betriebssituationen in einem Speicher abgespeichert sind, indem
- jeweils zu einer zu vermeidenden Betriebssituation eine Kombination aus Umweltbedingungen und Anlageneinstellungen als zu vermeidende Kombination abgespeichert ist, und/oder
- jeweils zu einer geeigneten Betriebssituation eine Kombination aus Umweltbedingungen und Anlageneinstellungen als geeignete Kombination abgespeichert ist, und wobei
mit dem Verfahren zum Vermeiden von zu vermeidenden Betriebssituationen
- Umweltbedingungen erfasst werden und
- in Abhängigkeit von den erfassten Umweltbedingungen und den abgespeicherten zu vermeidenden und/oder geeigneten Kombinationen
Anlageneinstellungen der Windenergieanlage so ausgewählt und eingestellt werden, dass
- Anlageneinstellungen abgespeicherter zu vermeidender Kombinationen vermieden werden, und/oder
- Anlageneinstellungen aus abgespeicherten geeigneten Kombinationen ausgewählt werden.

16. Windenergieanlage nach Anspruch 15, **dadurch gekennzeichnet, dass**
- die Windenergieanlage eine Anlagensteuerung aufweist und
- die Windenergieanlage, insbesondere die Anlagensteuerung, dazu vorbereitet ist, ein Verfahren nach einem der Ansprüche 1 bis 14 auszuführen.
